# EUROPEAN PATENT SPECIFICATION

(11) **EP 0 411 144 B1**
(45) Date of publication and mention of the grant of the patent: **19.07.1995**
(21) Application number: 90902699.9
(22) Date of filing: 31.01.1990
(51) Int. Cl.: B23Q 35/123

(54) **PROFILING METHOD**
PROFILERZEUGENDES VERFAHREN
PROCEDE DE PROFILAGE

(30) Priority: 14.02.1989 JP 34862/89
(43) Date of publication of application: 06.02.1991
(73) Proprietor: FANUC LTD., Minamitsuru-gun, Yamanashi 401-05 (JP)
(72) Inventor: TSUKAMOTO, Osamu Fanuc Mansion Harimomi 6-105, Minamitsuru-gun Yamanashi 401-05 (JP)
(74) Representative: Flint, Adam
(86) International application number: JP9000117
(87) International publication number: WO9009259

(56) References cited:
- EP-A- 0 088 449
- EP-A- 0 168 501
- FR-A- 2 516 827
- GB-A- 2 020 852
- JP-A- 6 048 243
- JP-A- 6 090 653
- JP-U- 6 274 956
- US-A- 4 456 864
- US-A- 4 456 962

## Description

The present invention relates to a tracing method by which tracing is carried out by designating a region by a wire limit, and more specifically, to a method by which a tracing direction can be arbitrarily changed in a single path.

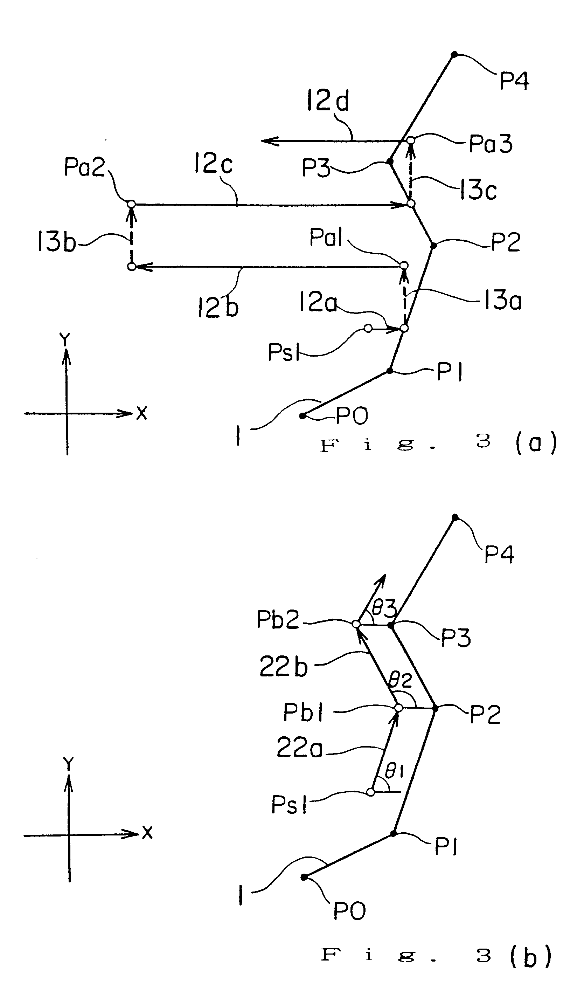

A method of tracing a model configuration by designating a region by a wire limit includes, for example, a method shown in Figure 3(a). As shown in the figure, tracing is carried out along a path 12a in a tracing direction parallel to the X-axis, from a tracing start point Ps1, and when a stylus comes into contact with a wire limit 1, the stylus senses the line, a predetermined amount of a pick feed 13a is effected from the point P1 to a point Pa1, and the tracing is again carried out along a path 12b which is parallel to the X-axis and extends in a direction opposite to that of the path 12a. Thereafter, a not shown model configuration is traced by sequentially executing a pick feed 13b, path 12c, pick feed 13c ... . Note that a tracing direction of the above respective paths may be set at a predetermined angle to the X-axis direction or the paths may be traced in the Y-axis direction.

Nevertheless, according to this method, the start point Pa1 of the path 12b is positioned inward of the wire limit 1, whereas the start point Pa3 of a path 12d is posi tioned outward of the wire limit 1. Therefore, tracing cannot be accurately carried out within a region enclosed by the wire limit 1, and thus the tracing accuracy is poor.

As a method of solving this problem, the method shown in Figure 3(b) can be used, in which tracing is carried out from the start point Ps1 to a point Pb1 along a path 22a traveling in a direction that is at an angle ϑ1 with respect to the X-axis, whereby the tracing is carried out in parallel to the line segment P1 - P2 of the wire limit 1. Thereafter, the tracing is carried out from the point Pb1 to a point Pb2 along a path 22b traveling in a direction that is at an angle ϑ2 with respect to the X-axis, whereby the tracing is carried out in parallel to the line segment P2 - P3 of the wire limit 1. Subsequently, the tracing is carried out in a similar way by combining paths traveling in different directions.

When, however, the configuration of the wire limit 1 is complex, the number of paths is greatly increased, which requires a complex program and increases the tracing time.

EP-A-0168501 discloses an area machining method in a numerically controlled machine tool.

Taking the above into consideration, an object of the present invention is to provide a tracing method by which a tracing direction can be arbitrarily changed in a single path.

According to the present invention, there is provided a method of carrying out a tracing operation in a region designated by a wire limit defined by limit line segments connecting a plurality of limit points, comprising the steps of:
(a) determining a first limit point nearest to a tracing start point from the wire limit points;
(b) extending a straight line from the tracing start point to a second point at which the straight line extended from the tracing start point intersects a straight line extended from a second limit point adjacent said first limit point at a pick feed angle, in parallel to the line which connects the nearest point and said second limit point adjacent said first limit point;
(c) repeating step (b) until an end point has been reached;
(d) performing a pick feed; and,
(e) tracing along a second tracing path in parallel to the wire limit in a tracing direction opposite to that of the first tracing path; characterised in that:
   the pick feed angle is arbitrarily set by the operator.

The folded line parallel to the wire limit is determined at a start point of the tracing and the stylus is moved on the single path along the folded line.

In the drawings:
Figure 1 is a conceptual diagram of a tracing method according to the present invention;
Figure 2 is a block diagram showing a hardware arrangement embodying the tracing method according to the present invention;
Figure 3(a) is a conceptual diagram of a conventional tracing method; and,
Figure 3(b) is a conceptual diagram of another conventional tracing method.

An embodiment of the present invention will be described below with reference to the drawings.

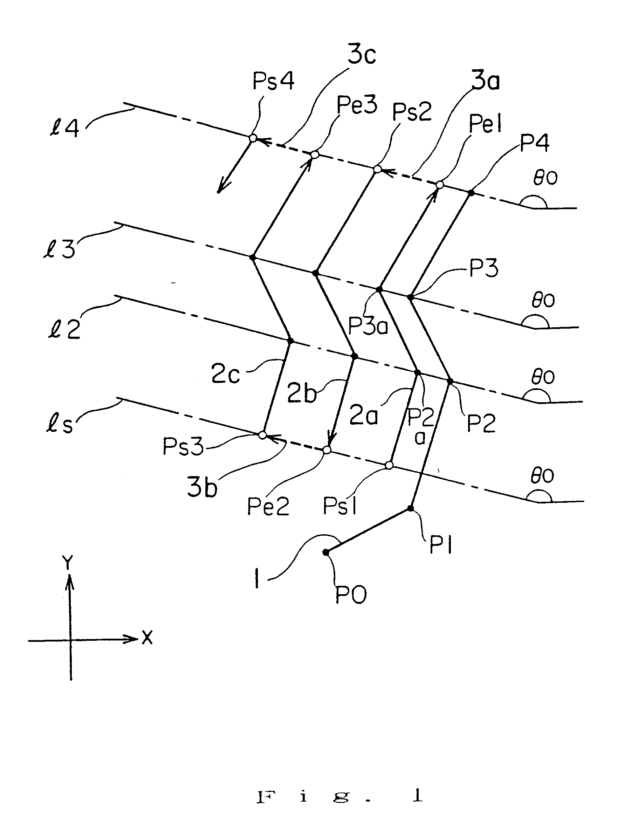

Figure 1 is a conceptual diagram of a tracing method according to the embodiment of the present invention, wherein a wire limit 1 is a software wire limit and set on a coordinate sequentially connecting points P0, P1 ... P4 input by an operator.

Here, how to determine the path along which a path 2a travels will be described.

First, a point nearest to a tracing start point Ps1 is determined from the points P0, P1 ... P4. Here the point P1 corresponds to the point to be determined and a straight line is extended from a start point Ps1 to a point P2a in parallel to the line segment P1 - P2 connecting the point P1 and the next point P2. The point P2a is the point at which the straight line extended from the start point Ps1 intersects a straight line ℓ2 extended from the point P2 at a pick feed angle of ϑ0. Note that the pick feed angle ϑ0 is arbitrarily set by the operator.

Similarly, a straight line is extended from the point P2a to the point P3a at which it intersects a straight line ℓ3 in parallel to the line segment P2 - P3, and further extended from the point P3a to the point Pe1 at which it intersects a straight line ℓ4 in parallel to the line segment P3 - P4 to determine the folded line Ps1 - P2a - P3a - Pe1. A stylus is moved from the point Ps1 to the point Pe1 along the traveling channel of the path 2a represented by the folded line, to carry out the tracing, and a predetermined amount of a pick feed 3a is carried out from the point Pe1 to the point Ps2 at a pick feed angle of ϑ0.

Next, the tracing is carried out by moving the stylus from the point Ps2 to a point Pe2 along a path 2b as a traveling channel parallel to the wire limit, which has been determined by the same method as that used to determine the traveling channel of the path 2a. The point Pe2 is the point at which the traveling channel of the path 2b intersects a straight line ℓs extended from the start point Ps1 at the pick feed angle of ϑ0.

A pick feed 3b is again carried out at the point Ps3, and thereafter, the tracing and pick feed are repeated in the same way in the sequence of a path 2c, pick feed 3c ..., and finally, the movement of the stylus is stopped to complete the tracing when the total of the pick feeds 3a, 3b ... has reached a preset total amount of the pick feeds.

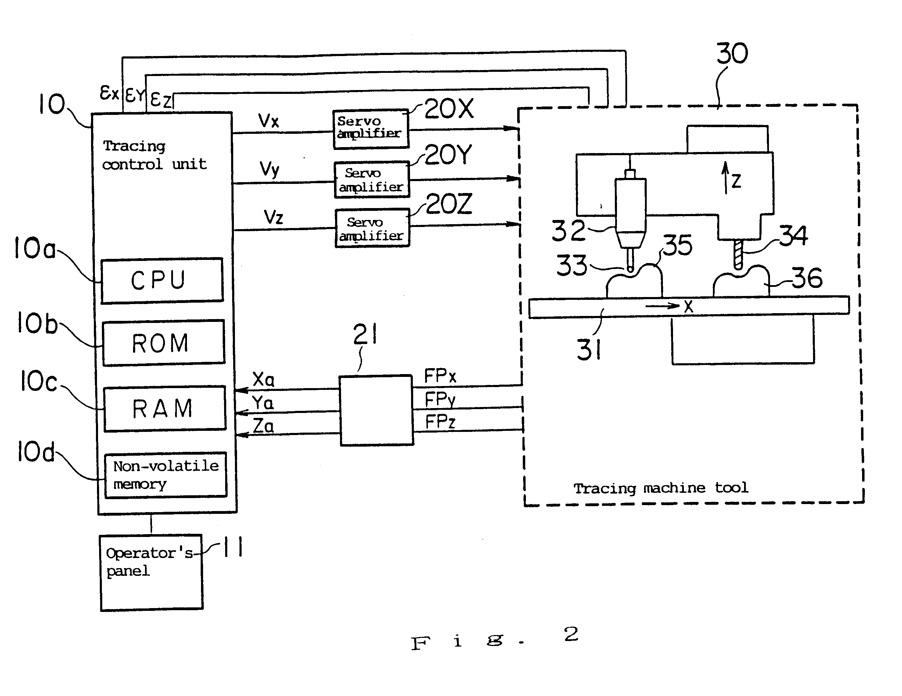

Figure 2 is a block diagram showing a hardware arrangement embodying the tracing method according to the present invention. A tracing control unit 10 includes a processor 10a, a ROM 10b in which a control program is stored, a RAM 10c, and a non-volatile memory 10d. The tracing control unit 10 is provided with amounts of deflection εx, εy, and εz of the respective axes of a machine tool 30 input thereto and outputs speed commands Vx, Vy, and Vz. Further, various data such as coordinate values for setting the wire limit, pick feed angles, a total amount of pick feeds, and the like are input to the tracing control unit 10 through an operator's panel by the operator, to thereby calculate the traveling channels of the paths.

Servo amplifiers 20X, 20Y, and 20Z amplify the speed commands Vx, Vy, and Vz from the tracing control unit 10 and drive the motors of the respective axes of the machine tool 30, to be described later. A position memory 21 counts up or down detection pulses FPx, FPy, and FPz in accordance with a rotational direction, to monitor the present positions Xa, Ya, and Za in the directions of the respective axes; the pulses being generated each time the motors of the respective axes are rotated a predetermined amount of rotation.

Although not shown, the tracing machine tool 30 is provided with an X-axis motor and a Y-axis motor for driving a table 31 in the X-axis and Y-axis directions, respectively, a Z-axis motor for driving a tracer head 32 and a cutter head 34 in the Z-axis direction, and a pulse generator for generating the detection pulses FPx, FPy, and FPz each time the motors of the respective axes are rotated by a predetermined amount.

A model 35 and a workpiece 36 are fixed to the table 31, the stylus 33 mounted on the tracer head 32 is brought into contact with the surface of the model 35 to carry out a predetermined tracing, and the cutter head 34 machines the workpiece 36 to a configuration similar to that of the model 35. As is well known, the tracer head 32 detects the amounts of deflection εx, εy, and εz on the surface of the model 35 along the X-, Y- and Z-axes.

As described above, according to the present invention, since the folded line parallel to the wire limit at the tracing start point is determined and the stylus is moved along a single path, any arbitrary region can be easily traced in a short time.

Further, because the tracing is carried out in parallel to the wire limit, the end of the workpiece can be smoothly cut in conformity with the configuration of the model.

## Claims

1. A method of carrying out a tracing operation in a region designated by a wire limit (1) defined by limit line segments connecting a plurality of limit points (P0,P1,P2,P3,P4), comprising the steps of:
(a) determining a first limit point (P1) nearest to a tracing start point (Ps1) from the wire limit points;
(b) extending a straight line (2a) from the tracing start point (Ps1) to a second point (P2a) at which the straight line extended from the tracing start point (Ps1) intersects a straight line (ℓ2) extended from a second limit point (P2) adjacent said first limit point (P1) at a pick feed angle (ϑ₀), in parallel to the line which connects the nearest point (P1) and said second limit point (P2) adjacent said first limit point (P1);
(c) repeating step (b) until an end point (Pe1) has been reached;
(d) performing a pick feed; and,
(e) tracing along a second tracing path in parallel to the wire limit in a tracing direction opposite to that of the first tracing path; characterized in that:
the pick feed angle (ϑ₀) is arbitrarily set by an operator.

2. A method according to claim 1, wherein a total amount of pick feeds is set, the pick feed and tracing processes being repeated until the total of said pick feeds has reached said total amount of pick feeds.

3. A method according to claim 1, wherein the pick feed is carried out in the direction of said pick feed angle (ϑ₀).

## Patentansprüche

1. Verfahren zum Durchführen eines Abtastvorganges in einem durch eine Leitungsgrenze (1), die durch Grenzleitungssegmente definiert ist, welche eine Vielzahl von Grenzpunkten (P0,P1,P2,P3,P4) miteinander verbinden, gekennzeichneten Bereich mit den folgenden Schritten:
(a) Bestimmen eines ersten Grenzpunktes (P1), der zu einem Abtastausgangspunkt (Ps1) nächstgelegen ist, aus den Leitungsgrenzpunkten;
(b) Ziehen einer geraden Linie (2a) vom Abtastausgangspunkt (Ps1) bis zu einem zweiten Punkt (P2a), an dem die vom Abtastausgangspunkt (Ps1) gezogene gerade Linie eine gerade Linie (12) schneidet, die von einem zweiten Grenzpunkt (P2) benachbart zum ersten Grenzpunkt (P1) unter einem Aufnahmevorschubwinkel (ϑ₀) gezogen wurde, parallel zu der Linie, die den nächsten Punkt (P1) und den zweiten Grenzpunkt (P2) benachbart zum ersten Grenzpunkt (P1) miteinander verbindet;
(c) Wiederholen von Schritt (b) bis ein Endpunkt (Pe1) erreicht worden ist;
(d) Durchführen eines Aufnahmevorschubes; und
(e) Abtasten einer zweiten Abtastbahn parallel zur Leitungsgrenze in einer Abtastrichtung, die zu der der ersten Abtastbahn entgegengesetzt ist, dadurch gekennzeichnet, daß
der Aufnahmevorschubwinkel (ϑ₀) von einem Operateur willkürlich eingestellt wird.

2. Verfahren nach Anspruch 1, bei dem eine Gesamtgröße an Aufnahmevorschüben eingestellt wird, wobei die Aufnahmevorschub- und Abtastvorgänge wiederholt werden, bis der Gesamtwert der Aufnahmevorschübe die Gesamtgröße der Aufnahmevorschübe erreicht hat.

3. Verfahren nach Anspruch 1, bei dem der Aufnahmevorschub in Richtung des Aufnahmevorschubwinkels (ϑ₀) durchgeführt wird.

## Revendications

1. Procédé de réalisation d'une opération de profilage dans une région délimitée par un fil-limite (1), définie par des segments de ligne-limite reliant plusieurs points-limite (P0, P1, P2, P3, P4), comportant les étapes consistant à:
(a) déterminer à partir des points-limite du fil un premier point-limite (P1) le plus proche d'un point de départ de profilage (Ps1);
(b) tracer une ligne droite (2a) à partir du point de départ de profilage (Ps1) jusqu'à un second point (P2a) sur lequel la ligne droite tracée depuis le point de départ de profilage (Ps1) coupe une ligne droite (ℓ2) tracée depuis un second point-limite (P2) adjascent audit premier point limite (P1) à un angle d'avance par arasement (ϑ₀), en parallèle à la ligne qui relie le point le plus proche (P1) et ledit second point-limite (P2) adjascent audit premier point limite (P1);
(c) répéter l'étape (b) jusq'à avoir atteint un point extrême (Pe1);
(d) effectuer une avance par arasement; et
(e) tracer le long d'un second parcour de profilage, parallèle au fil limite, dans une direction de profilage opposée à celle du premier parcour de profilage; caractérisé en ce que:
l'angle d'avance par arasement (ϑ₀) est réglé arbitrairement par l'opérateur.

2. Procédé selon la revendication 1, caractérisé en ce qu'une quantité totale d'avance par arasement est réglée, les procédures d'avance par arasement et de profilage étant répétées jusqu'à ce que la totalité desdites alimentations de saisie ait atteint ladite quantité totale d'alimentations de saisie.

3. Procédé selon la revendication 1, caractérisé en ce que l'avance par arasement est effectuée dans la direction dudit angle (ϑ₀) d'avance par arasement.
